# EUROPÄISCHE PATENTSCHRIFT

(11) **EP 0 272 509 B1**
(45) Veröffentlichungstag und Bekanntmachung des Hinweises auf die Patenterteilung: **15.03.1995**
(21) Anmeldenummer: 87117790.3
(22) Anmeldetag: 02.12.1987
(51) Int. Cl.: C09B 67/40, D06P 1/16

(54) **Flüssigeinstellungen von Dispersionsfarbstoffen zum Färben von Textilmaterialien**
Liquid dispersions of disperse dyes for dyeing textile materials
Préparations liquides de colorants de dispersion pour la teinture de matériaux textiles

(30) Priorität: 22.12.1986 DE 3643864
(43) Veröffentlichungstag der Anmeldung: 29.06.1988
(73) Patentinhaber: CASSELLA Aktiengesellschaft, D-60386 Frankfurt (DE)
(72) Erfinder: Hofmann, Klaus, D-6000 Frankfurt/M. 61 (DE); Bühler, Ulrich, Dr., D-8755 Alzenau (DE); Dietz, Erwin, Dr., D-6233 Kelkheim 3 (DE)
(74) Vertreter: Muley, Ralf, Dr.

(56) Entgegenhaltungen:
- EP-A- 0 067 904
- EP-A-00 018 947
- US-A- 3 707 347
- CHEMICAL ABSTRACTS, vol. 102, no. 20, 20 Mai 1985 Columbus, Ohio, USA. Seite 82; rechte Spalte; ref. no. 168260H & JP-A-59226060 (TORAY INDUSTRIES INC.)
- CHEMICAL ABSTRACTS, vol. 108, no. 10, 7 März 1988 Columbus, Ohio, USA. Seite 107; linke Spalte; ref. no. 77349B & JP-A-62121776 (MITSUBISHI CHEMICAL INDUSTRIES CO. LTD)

## Beschreibung

Flüssige Zubereitungen von Dispersionsfarbstoffen, also von Farbstoffen, die frei sind von wasserlöslichmachenden Gruppen und zum Färben von hydrophoben synthetischen Fasern, wie z.B. Polyester, eingesetzt werden, sind bekannt und im Handel erhältlich.

Derartige Füssigfarbstoffeinstellungen werden in der Weise hergestellt, daß man den Dispersionfarbstoff zusammen mit Dispergiermitteln und weiteren Zusatzstoffen, wie z.B. Frostschutz- und Feuchthaltemitteln, Antischaummitteln, Antimicrobica, Fungiziden etc. vermischt und mechanisch, z.B. durch Vermahlen, bis zu einer gewissen Feinverteilung zerkleinert. Eine ausreichende Feinverteilung ist im allgemeinen eine solche, bei der 90 % der Farbstoffteilchen des Dispersionfarbstoffs eine Korngröße von kleiner als 5 »m, vorzugsweise 50 % oder mehr der Farbstoffteilchen eine Korngröße von kleiner als 1 »m haben. Im Zuge dieser Aufbereitung, die man auch als "Finish" bezeichnet, wird der Dispersionsfarbstoff in seine färbefertige Form übergeführt, die eine gute Farbausbeute und eine egale Färbung dann garantiert, wenn die Feinverteilung des Dispersionsfarbstoffs in der Flotte und die Stabilität der Dispersion gut sind.

Eine praxisgerechte Flüssigeinstellung eines Dispersionsfarbstoffs muß jedoch noch weitere Qualitätskriterien, z.B. hinsichtlich rheologischer Eigenschaften, Viskosität, Redispergierbarkeit, Kombinationsfähigkeit mit anderen Farbstoffen, Salz- bzw. Hilfsmittelempfindlichkeit etc., erfüllen.

So muß die Viskosität der Flüssigeinstellung in bestimmten Grenzen liegen, d.h. die Flüssigfarbstoffeinstellung muß gießfähig bzw. in Rohrleitungen noch pumpbar sein und sich bei der Herstellung von Farbstoffmischungen gut rühren lassen. Eine wichtige Forderung im Zusammenhang mit der Viskosität ist die, daß die Flüssigfarbstoffeinstellung auch bei längerer Lagerung und/oder bei Lagerung bei erhöhter Temperatur ihre Feinverteilung beibehalten muß, d.h. nicht absetzen oder sedimentieren darf. Ein Absetzen bedeutet, daß sich im Laufe der Zeit die Farbstoffkonzentration am Boden des Gebindes erhöht und im oberen Teil des Gebindes verringert und dadurch eine definierte Farbstoffentnahme unmöglich wird. Es ist dabei sogar möglich, daß sich im oberen Teil des Gebindes dann gar kein Farbstoff mehr befindet. Darüberhinaus ist es dabei möglich, daß sich der Farbstoff am Boden des Gebindes in einer schwer bis nicht mehr aufrührbaren Form anreichert, was als "kittiges" Absetzen bezeichnet wird. Ein solches Absetzen erfordert, daß der Anwender diese Flüssigfarbstoffeinstellung durch Einhängen eines Rührwerks dauernd oder in zeitlichen Abständen rührt oder einen sogenannten Tumbler (Rhönrad) einsetzt, in dem das gesamte Gebinde bewegt wird, was einen zusätzlichen Kostenaufwand für die Anschaffung von Geräten oder der ständigen Reinigung dieser Geräte erfordert. Niedrigviskose, leichter handhabbare Flüssigfarbstoffeinstellungen zeigen in der Regel ein rascheres, unerwünschtes Absetzverhalten als höher viskose.

Nun ist es bei Flüssigeinstellungen von Disperionsfarbstoffen mit einem geringen Farbstoffgehalt in gewissen Grenzen möglich, durch geeignete Wahl oder Kombination der Dispergiermittel bzw. durch geeignete Wahl der Mengen oder Mengenverhältnisse dieser Dispergiermittel Einstellungen mit der gewünscht niedrigen Viskosität herzustellen, die gleichzeitig kein oder ein noch akzeptierbar geringes Absetzverhalten zeigen.

Aus Gründen der Wirtschaftlichkeit ist es jedoch erwünscht, Flüssigzubereitungen mit einem möglichst hohen Farbstoffgehalt von bis zu 50 % einzustellen, was naturgemäß bedeutet, daß der Dispergier- und Hilfsmittelgehalt auf Werte bis zu 20 % abgesenkt werden muß und solche Einstellungen einen Wassergehalt von minimal 20 % haben. Der Spielraum bei Erzielung der gewünschten Viskosität und gleichzeitig des gewünschten Absetzverhaltens ist bei hochkonzentrierten Flüssigeinstellungen also sehr gering, und dieses Ziel konnte in der Praxis bisher meist nicht erreicht werden.

Flüssige Zubereitungen von Dispersionsfarbstoffen, die als Zusatz pulverförmige anorganische Oxide oder Silikate enthalten, sind bekannt. In den Chemical Abstracts, Band 102 (1985), Referat 168260h, ist eine Dispersionsfarbstoffzubereitung erwähnt, die zur Verbesserung des Färbeverhaltens ein wasserlösliches Kunstharz und - in einer Menge von 18,5 %, bezogen auf die Gesamtmenge der Farbstoffzubereitung - Siliciumdioxid enthält. In der US-A-3 707 347 und der EP-A-67 904 werden spezielle Farbstoffzubereitungen erwähnt, die Epoxyharze oder Polyamidharze bzw. o-Toluolsulfonylchlorid oder p-Toluolsulfonylchlorid und als Verdicker Siliciumdioxid oder Bentonite enthalten. Hinweise auf eine Beeinflussung des Absetzverhaltens der Flüssigzubereitungen durch diese Zusätze gibt es nicht.

Es wurde nun überraschenderweise gefunden, daß das Absetzverhalten von Dispersionsfarbstoff-Flüssigeinstellungen, die keine Epoxyharze oder Polyamidharze und kein Toluolsulfonylchlorid enthalten, durch Zusatz pulverförmiger hochdisperser anorganischer Oxide oder Silikate oder Mischungen dieser Stoffe miteinander, die eine spezifische Oberfläche durch Gasadsorption nach Brunauer, Emmett und Teller, abgekürzt als spezifische Oberfläche (BET), zwischen 20 und 800 m²/g besitzen, optimal gestaltet werden kann.

Die Bestimmung der spezifischen Oberfläche von Feststoffen durch Gasadsorption nach der Methode von Brunauer, Emmett und Teller (BET), vergl. Brunauer S., Emmett P.H. und Teller E.: "Adsorption of Gases in Multimolecular Layers", Journal of the American Chemical Society, 60 (1938), 309-319, ist z.B. beschrieben in den Deutschen Normen (DIN) Blatt 66131 sowie in Gregg S.J. und Sing K.S.W.: "Adsorption, Surface Area and Porosity", Academic Press, London/New York (1967), Kap. 2, insbesondere Seiten 35 bis 65.

Die spezifische Oberfläche (BET) beträgt für die erfindungsgemäß einzusetzenden anorganischen Produkte 20 bis 800 m²/g, vorzugsweise 25 bis 600 m²/g.

Geeignete anorganische Oxide oder Silikate sind beispielsweise Siliciumdioxid, Kieselsäure, Aluminiumoxid und Titandioxid sowie natürlich vorkommende Schichtsilikate, wie z. B. Bentonite und ähnliche.

Bevorzugt sind hochdisperse Siliciumdioxide sowie Mischungen von hochdispersen Siliciumdioxiden mit hochdispersen Aluminiumoxiden.

Besonders bevorzugt sind Aluminiumhydroschichtsilikate, wie sie in der Natur unter der Bezeichnung Bentonit vorkommen, wobei die aktivierten Formen dieser Bentonite wiederum besonders bevorzugt sind.

Diese anorganischen Stoffe sind im Handel erhältlich und werden z.B. beschrieben in Ullmanns Enzyklopädie der Technischen Chemie, Bd. 23, S. 311 ff. (1983, IV. Auflage); Bd. 18, Seite 651 ff.; Bd. 21, S.462 ff.

Die hochdispersen pulverförmigen anorganischen Oxide bzw. Silikate können den Farbstoffzubereitungen sowohl unmittelbar in pulvriger Form, bevorzugt aber in Form einer Anschlämmung, insbesondere in Wasser, zugesetzt werden. Bei Einsatz einer Anschlämmung sollte dem anorganischen Produkt vor dem Zusatz in den Farbstoffanschlag Gelegenheit zum vollständigen Aufquellen gegeben werden.

Die Zusatzmengen dieser anorganischen Stoffe, bezogen auf die Flüssigeinstellungen, liegen im Bereich zwischen 0,1 und 10 Gew.%. Bevorzugt wird eine Zusatzmenge von 0,2 bis 5 Gew.%. Der Zusatz kann vor der Mahlung des Dispersionsfarbstoffs erfolgen oder aber nach der Mahlung. Den erfindungsgemäß einzusetzenden anorganischen Stoff läßt man bevorzugt nach dem Zusatz einige Zeit (1 bis 24 Stunden) quellen und läßt dann auf die so erhaltene Dispersion anschließend Scherkräfte einwirken. Die Einwirkung der Scherkräfte bei Zusatz vor der Mahlung erfolgt durch die Mahlkörper, bei Zusatz während der Mahlung bzw. nach der Mahlung durch z.B. einen Rührer.

Als Dispergiermittel für die Erzeugung solcher Präparationen werden anionenaktive oder nichtionogene, grenzflächenaktive Verbindungen verwendet, die auch gemeinsam eingesetzt werden können. Sofern derartige Farbstoffpräparate anionisch gefinisht sind, kommen dafür die beim konventionellen Färbeprozeß mit Dispersionsfarbstoffen aus wäßrigem Medium sonst üblichen anionischen Dispergiermittel in Betracht. Bevorzugt geeignet sind in dieser Hinsicht die Alkalimetall- oder Ammoniumsalze der Ligninsulfonsäuren, welche nach dem Sulfit- oder Kraft-Verfahren gewonnen werden; Kondensationsprodukte aus aromatischen Sulfonsäuren und Formaldehyd, insbesondere Kondensationsprodukte aus gegebenenfalls substituiertem Phenol mit Formaldehyd und Natriumbisulfit; Alkalimetallsalze von Kondensationsprodukten aus gegebenenfalls substituiertem Phenol, Naphthalin- bzw. Naphtholsulfonsäuren mit Formaldehyd und Natriumbisulfit; Alkalimetallsalze von Kondensationsprodukten aus gegebenenfalls substituierten Phenolsulfonsäuren, Formaldehyd und Harnstoff; langkettige Alkyl- oder Arylsulfonate, sowie Alkyl-aryl-polyglykol-ethersulfate.

Bevorzugte nichtionische Dispergiermittel oder Emulgatoren für die Flüssigeinstellungen von unlöslichen Farbstoffen sind z.B. Umsetzungsprodukte von Alkylenoxiden, wie z.B. Ethylen- oder Propylenoxid, mit alkylierbaren Verbindungen, wie z.B. Fettalkoholaten, Fettaminen, Fettsäuren, gegebenenfalls mehrkernigen Phenolen, Alkylphenolen, Arylalkylphenolen und deren Säureester, sowie Carbonsäureamiden, insbesondere Anlagerungsprodukte von 5 bis 10 Ethylenoxideinheiten an C₈- bis C₁₀-Alkylphenolen sowie veresterte Oxalkylate, wie sie aus den europäischen Patentschriften EP-B1-0 028 342 und EP-B1-0 041 688 bekannt sind.

Als Feuchthaltemittel und Frostschutzmittel in den Farbstoff-Formulierungen werden bevorzugt Di- oder Polyalkohole, wie Ethylenglykol, Propylenglykol, Glyzerin oder Sorbit verwendet.

Die Herstellung der zuvor erwähnten Präparationen kann nach den bekannten Verfahren erfolgen. Der Dispersionsfarbstoff oder bei Mischungen die Dispersionsfarbstoffe werden zusammen mit den geeigneten Dispergiermitteln bzw. Dispergiermittelgemischen (wobei es zweckmäßig ist, anionische und nichtionische Dispergiermittel bzw. Dispergiermittelgemische im Verhältnis 9 : 1 bis 1 : 9 gemeinsam einzusetzen), sowie den weiteren Zusätzen in Wasser angeschlämmt und einer mechanischen Zerkleinerung unterworfen. Diese mechanische Zerkleinerung erfolgt bevorzugt in Knetern, Kugelmühlen, Dispergatoren, Perlmühlen, Sandmühlen oder Attritoren.

Das Erreichen eines ausreichenden Feinverteilungszustands des Dispersionsfarbstoffs von im allgemeinen 90 % der Farbstoffteilchen entsprechend einer Korngröße von kleiner als 5 »m, vorzugsweise von 50 % oder mehr der Teilchen kleiner als 1 »m, kann durch einen Filtertest, dem Mikroskop oder durch Sedimentationsanalyse nachgeprüft werden.

Die so erhaltenen Präparationen enthalten den Farbstoff in stabiler, feinverteilter Form und sind bei hoher Farbstoffkonzentration dispergiermittelarm und gießbar. Derartige flüssige Dispersionsfarbstoff-Einstellungen werden zum Färben und Bedrucken von Polyesterfasern und des Polyesterfaseranteils von entsprechenden Mischungen mit anderen Fasern eingesetzt. Ein bevorzugtes Einsatzgebiet ist dabei das kontinuierliche Färben derartiger Textilien nach dem Thermosol-Verfahren, bei dem der in einer wasserhaltigen Klotzflotte dispergierte Farbstoff auf die textile Warenbahn geklotzt und nach dem Zwischentrocknen durch kurzzeitige Hitzeeinwirkung auf der Faser fixiert wird.

Der Erfindungsgegenstand wird durch die nachfolgend aufgeführten Beispiele erläutert.

### Beispiel 1

672 Teile einer wäßrigen Paste Disperse Yellow C.I.114, entsprechend 380 g Reinfarbstoff, 200 Teile Monoethylglykol, 71 Teile eines handelsüblichen Dispergiermittels auf Basis 4-Benzyl-2-hydroxydiphenyl und Ethylenoxid, 1 Teil o-Phenylphenol und 36 Teilen Wasser werden in einem Gefäß mit der Dissolverscheibe angeschlagen und im Autoklaven 2 h bei 120°C gerührt. Anschließend werden 20 Teile eines aktivierten Aluminiumhydroschichtsilikats (handelsüblicher Bentonit) mit einer spezifischen Oberfläche (BET) von durchschnittlich 30 bis 40 m²/g zugegeben. Nach einer Quellzeit von 6 h wird in einer Perlmühle mit Ottawa-Sand der durchschnittlichen Körnung von 0,7 bis 1 mm gemahlen. Nach einer Mahlzeit von 3 h erhält man eine Dispersion, deren Farbstoffteilchen zu 80 % eine Korngröße von kleiner als 1 »m aufweisen. Nach dem Abtrennen des Mahlsandes und anschließender Siebung durch ein 90 DIN-Sieb erhält man einen gut fließfähigen Teig mit einem Farbstoffgehalt von 38 %. Diese Farbstoffzubereitung ist bei Raumtemperatur und bei 50°C mehrere Monate lang lagerstabil ohne Separierung zu zeigen.

### Beispiel 2

Entsprechend der Zusammensetzung des Beispiels 1 werden jedoch 54 Teile Wasser und nach dem Erhitzen auf 120°C zwei Teile des modifizierten aktivierten Aluminiumhydroschichtsilikats zugesetzt und wird ebenso verfahren. Der Farbstoffteig ist bei Raumtemperatur und bei 50°C mehrere Monate lagerstabil ohne Separierung zu zeigen.

### Beispiel 3

651,0 Teile einer wäßrigen Paste des Farbstoffs C.I. Orange 151, entsprechend 221,5 g Reinfarbstoff, 150 Teile eines gereinigten Ligninsulfonats, 50 Teile Monoethylenglykol, 3 Teile o-Phenylphenol und 15 Teile eines aktivierten Aluminiumhydroschichtsilikats (handelsüblicher Bentonit mit einer spezifischen Oberfläche (BET) von 30 bis 40 m²/g) sowie 131 Teile Wasser werden in einer Perlmühle mit Ottawa-Sand der durchschnittlichen Körnung von 0,7 bis 1,0 mm gemahlen. Nach einer Mahlzeit von 1 1/2 h erhält man eine Dispersion, deren Farbstoffteilchen zu 80 % eine Korngröße von kleiner als 1 »m aufweisen. Nach dem Abtrennen des Mahlsandes und anschließender Siebung durch ein 120 DIN Sieb erhält man einen gut fließfähigen Farbstoffteig mit einem Farbstoffgehalt von 22,1 %. Dieser Farbstoffteig ist bei Raumtemperatur und bei 50°C mehrere Monate lagerstabil, d.h. kein Farbstoffbodensatz und keine Phasentrennung sind feststellbar.

### Beispiel 4

479,3 Teile einer wäßrigen Paste des Farbstoffs C.I. Disperse Blue 165, entsprechend 441 Teile Reinfarbstoff, 221 Teile Monoethylenglykol, 44 Teile eines handelsüblichen Dispergiermittels auf Basis eines mit Essigsäure veresterten Umsetzungsprodukts von Nonylphenol mit Ethylenoxid, 22 Teile eines Kondensationsprodukts aus Kresol, dem Natriumsalz der 2-Hydroxy-napthalin-6-sulfonsäure, Formaldehyd und Natriumsulfit, 1 Teil Nonylphenolnatrium, 3 Teile o-Phenylphenol, 20 Teile eines aktivierten Aluminiumhydroschichtsilikats mit einer spezifischen Oberfläche (BET) von 30 bis 50 m²/g und 209,7 Teile Wasser werden mit dem Dissolver angeschlagen und nach 3 h in einer Sandmühle, wie in Beispiel 1, gemahlen. Nach einer Mahlzeit von 3 h bei 25°C erhält man eine Dispersion, deren Farbstoffteilchen zu 70 % eine Korngröße von < 1»m haben. Nach dem Abtrennen des Mahlsandes und Siebung durch ein 120 DIN Sieb erhält man einen fließfähigen Farbstoffteig, der 44,1 Teile Farbstoff enthält. Dieser Teig zeigt, mehrere Monate sowohl bei Raumtemperatur als auch bei 50°C gelagert, kein Absetzen des Farbstoffs und keine Phasentrennung.

### Beispiel 5

672 Teile einer wäßrigen Paste Disperse Yellow C.I.114, entsprechend 380 Teile Reinfarbstoff, 200 Teile Monoethylenglykol, 71 Teile des Umsetzungsproduktes aus 4-Benzyl-2-hydroxydiphenyl mit 12 Mol Ethylenoxid, 1 Teil o-Phenylphenol und 26 Teile Wasser werden mit der Dissolverscheibe angeschlagen und im Autoklaven 2 h bei 120°C gerührt. Dabei bildet sich die färbestabile γ-Modifikation. Anschließend werden 10 g eines aktivierten Aluminiumhydroschichtsilikats und 16 g eines pyrogen hergestellten hochdispersen Siliciumdioxids und 4 Teile eines hochdispersen Aluminiumoxids mit einer spezifischen Oberfläche (BET) von 170 m²/g zugegeben und nach einer Quellzeit von 3 h wie in Beispiel 1 gemahlen. Nach einer Mahlzeit von 4 h bei 25°C erhält man eine Dispersion, deren Farbstoffteilchen 80 % kleiner als 1 »m sind. Nach dem Abtrennen des Mahlsandes und Siebung durch ein 90 DIN Sieb erhält man einen fließfähigen Farbstoff, der 38 % Farbstoff enthält. Dieser Teig ist mehrere Monate bei 50°C und Raumtemperatur lagerstabil, es wird kein Absetzen des Farbstoffs und keine Phasentrennung beobachtet.

### Beispiel 6

563 Teile einer wäßrigen Paste des Farbstoffs Disperse Blue C.I.96, entsprechend 205 Teilen Reinfarbstoff, 82 Teile eines gereinigten Natrium-Ligninsulfonats, 100 Teile Monoethylenglykol, 3 Teile o-Phenylphenol und 12,5 Teile hochdisperses Siliciumdioxid und 2,5 Teile hochdisperses Aluminiumoxid mit einer spezifischen Oberfläche (BET) von 170±30 m²/g und 237 Teile Wasser werden mit dem Dissolver angeschlagen und zwei Stunden in einer Sandmühle, wie in Beispiel 1 beschrieben, gemahlen. Nach einer Mahlzeit von zwei Stunden bei 20 bis 25°C erhält man eine Dispersion, deren Farbstoffteilchen zu 85 % eine Korngröße von < 1»m haben. Nach dem Abtrennen des Mahlsandes und Siebung durch ein 120 DIN-Sieb erhält man einen Farbstoffteig, der 20,5 % Farbstoff enthält. Dieser Teig zeigt, mehrere Monate bei Raumtemperatur oder bei 50°C gelagert, kein Absetzen des Farbstoffs und keine Phasentrennung.

## Patentansprüche

1. Flüssigeinstellungen von Dispersionsfarbstoffen zum Färben von hydrophoben synthetischen Fasermaterialien bzw. von Mischungen dieser Fasermaterialien mit Cellulosefasermaterial oder Wolle, dadurch gekennzeichnet, daß diesen Flüssigeinstellungen in Mengen von 0,1 bis 10 Gew.% pulverförmige hochdisperse anorganische Oxide oder Silikate oder Mischungen dieser Stoffe miteinander mit einer spezifischen Oberfläche (BET) von 20 bis 800 m²/g zugesetzt werden und daß diese Flüssigeinstellungen keine Epoxyharze oder Polyamidharze und kein Toluolsulfonylchlorid enthalten.

2. Flüssigeinstellungen von Dispersionsfarbstoffen gemäß Anspruch 1, dadurch gekennzeichnet, daß diesen als hochdisperse anorganische Oxide oder Silikate Siliciumdioxid, Aluminiumoxid, Titandioxid, Kieselsäure oder natürlich vorkommende Aluminiumhydroschichtsilikate zugesetzt werden.

3. Flüssigeinstellungen von Dispersionsfarbstoffen gemäß Anspruch 1 und/oder 2, dadurch gekennzeichnet, daß die pulverförmigen hochdispersen anorganischen Oxide oder Silikate eine spezifische Oberfläche (BET) von 25 bis 600 m²/g besitzen.

4. Flüssigeinstellungen von Dispersionsfarbstoffen gemäß Anspruch 1 und/oder 2, dadurch gekennzeichnet, daß hochdisperse, natürlich vorkommende aktivierte Aluminiumhydroschichtsilikate zugesetzt werden.

5. Verfahren zur Herstellung von Flüssigeinstellungen von Dispersionsfarbstoffen zum Färben von hydrophoben synthetischen Fasermaterialien gemäß einem oder mehreren der Ansprüche 1 bis 4, dadurch gekennzeichnet, daß den Flüssigeinstellungen der Dispersionsfarbstoffe 0,1 bis 10 Gew.% eines hochdispersen pulverförmigen anorganischen Oxids und/oder Silikats mit einer spezifischen Oberfläche (BET) bis 20 bis 800 m²/g zugesetzt werden.

## Claims

1. Liquid formulations of disperse dyestuffs for dyeing hydrophobic synthetic fibre materials or mixtures of these fibre materials with cellulose fibre material or wool, characterized in that to these liquid formulations are added, in amounts of 0.1 to 10 % by weight, pulverulent highly disperse inorganic oxides or silicates or mixtures of these substances with one another having a specific surface area (BET) of 20 to 800 m²/g and that these liquid formulations do not contain epoxide resins or polyamide resins and do not contain toluene sulfonyl chloride.

2. Liquid formulations of disperse dyestuffs according to Claim 1, characterized in that added to them as highly disperse inorganic oxides or silicates are silicon dioxide, aluminium oxide, titanium dioxide, silica or naturally occurring aluminium hydro layer silicates.

3. Liquid formulations of disperse dyestuffs according to Claim 1 and/or 2, characterized in that the pulverulent highly disperse inorganic oxides or silicates have a specific surface area (BET) of 25 to 600 m²/g.

4. Liquid formulations of disperse dyestuffs according to Claim 1 and/or 2, characterized in that highly disperse, naturally occurring activated aluminium hydro layer silicates are added.

5. Process for preparing liquid formulations of disperse dyestuffs for dyeing hydrophobic synthetic fibre materials according to one or more of Claims 1 to 4, characterized in that to the liquid formulations of the disperse dyestuffs are added 0.1 to 10 % by weight of a highly disperse pulverulent inorganic oxide and/or silicate having a specific surface area (BET) up to 20 to 800 m²/g.

## Revendications

1. Formulations liquides de colorants dispersés pour la teinture de matières fibreuses synthétiques, hydrophobes, respectivement des mélanges de ces matières fibreuses avec de la matière fibreuse cellulosique ou la laine caractérisées en ce qu'on ajoute à ces formulations liquides, dans des quantités de 0,1 à 10 % en poids, des oxydes ou silicates minéraux pulvérulants, hautement dispersés, ou des mélanges de ces matières entre elles, ayant une surface spécifique (BET) de 20 à 800 m²/g et en ce que ces formulations liquides ne contiennent pas de résines époxy ou de résines polyamides et ne contiennent pas de chlorure de toluènesulfonyle.

2. Formulations liquides de colorants dispersés selon la revendication 1, caractérisées en ce qu'on ajoute à celles-ci des oxydes ou des silicates minéraux, le dioxyde de silicium, l'oxyde d'aluminium, le dioxyde de titane, l'acide silicique ou des hydrosilicates d'aluminium à structure stratifiée naturels, hautement dispersés.

3. Formulations liquides de colorants dispersés selon la revendication 1 et/ou 2, caractérisées en ce que les oxydes ou les silicates minéraux pulvérulents, hautement dispersés, ont une surface spécifique (BET) de 25 à 600 m²/g.

4. Formulations liquides de colorants dispersés selon la revendication 1 et/ou 2, caractérisées en ce qu'on ajoute des hydrosilicates d'aluminium à structure stratifiée naturels, activés, hautement dispersés.

5. Procédé pour la préparation de formulations liquides de colorants dispersés pour la teinture de matières fibreuses synthétiques selon une ou plusieurs des revendications 1 à 4, caractérisé en ce qu'on ajoute aux formulations liquides des colorants dispersés de 0,1 à 10 % en poids d'un oxyde et/ou silicate minéral pulvérulent, hautement dispersé, ayant une surface spécifique (BET) de 20 à 800 m²/g.
